# EUROPÄISCHE PATENTSCHRIFT

(11) **EP 2 087 023 B1**
(45) Veröffentlichungstag und Bekanntmachung des Hinweises auf die Patenterteilung: **05.06.2013**
(21) Anmeldenummer: 07846503.6
(22) Anmeldetag: 24.10.2007
(51) Int. Cl.: C08G 18/00

(54) **LÖSUNGEN BLOCKERTER POLYIMIDE BZW. POLYAMIDIMIDE**
SOLUTIONS OF CAPPED POLYIMIDES OR POLYAMIDE IMIDES
SOLUTIONS DE POLYIMIDES OU POLYAMIDIMIDES BLOQUÉS

(30) Priorität: 03.11.2006 DE 102006052240
(43) Veröffentlichungstag der Anmeldung: 12.08.2009
(73) Patentinhaber: Bayer Intellectual Property GmbH, 40789 Monheim (DE)
(72) Erfinder: GERTZMANN, Rolf, 51377 Leverkusen (DE); BAUMBACH, Beate, 51399 Burscheid (DE); HALPAAP, Reinhard, 51519 Odenthal (DE); KUETTNER, Wolfram, 51467 Bergisch Gladbach (DE)
(74) Vertreter: BIP Patents
(86) Internationale Anmeldenummer: PCT/EP2007/009211
(87) Internationale Veröffentlichungsnummer: WO 2008/052688

(56) Entgegenhaltungen:
- EP-A- 0 942 023
- EP-A- 1 640 395
- DE-A1- 3 240 934
- JP-A- 2005 120 134
- US-A- 4 259 221
- US-A- 4 505 980
- US-A- 5 723 536

## Beschreibung

Die vorliegende Erfindung betrifft wässrige Lösungen Polyimidstruktur- und gegebenenfalls auch Polyamidstruktur-aufweisender Harze mit blockierten Isocyanatgruppen (im Folgenden auch "Polyimide, bzw. Polyamidimide" oder "-harze" genannt), die sich leicht zu hochwertigen, sehr flexiblen Beschichtungen mit den für Polyamidimiden typischen, ausgezeichneten thermischen Eigenschaften und chemischen Beständigkeiten verarbeiten lassen, ein Verfahren zu Ihrer Herstellung und ihre Verwendung.

In der JP 2005 120134 werden wässerlösliche Polyamidimide beschrieben, die durch Umsetzung von aromatischen Polyisocyanaten und tribasischen Säureanhydriden erhalten werden. Um zu guten Lackeigenschaften der wässrigen Produkte zu gelangen, werden hochmolekulare Polymere mit zahlenmittleren Molekulargewichten zwischen 5.000 und 50.000 g/mol in die wässrige Phase gebracht. Die Einstellung des hohen Molekulargewichts geschieht durch gezielte Wahl des Äquivalenzverhältnisses von Isocyanatgruppen zu Säure- und Anhydridgruppen. Es wird darauf hingewiesen, dass Molekulargewichte unter 5000 g/mol zwar die Handhabung und damit die Dispergierung des Harzes vereinfachen, die Eigenschaften der Produkte allerdings herabgesetzt sind. Wünschenswert sind Harze und deren Lösungen, die gut verarbeitbar sind, gleichzeitig aber auch zu Beschichtungen mit hohem Eigenschaftsniveau führen.

US 4,259,221 beschreibt ebenfalls wasserlösliche Polyamidimide, deren Lösungen u.a. als Beschichtungsmittel verwendet werden können. Gemäß diesem Dokument können Polyamidimide beispielsweise aus der Umsetzung von Polyaminen mit Carbonsäureanhydriden in geringem Überschuß erhalten werden.

Optional können die so gebildeten Polyamidimide auch mit blockierten oder unblockierten Polyisocyanaten umgesetzt werden. In den Beispielen sind keine solchen Umsetzungen, weder mit unblockierten Isocyanaten, noch mit blockierten Isocyanaten aufgeführt. Eine Aussage zur Verarbeitbarkeit der Polyamidimide, bzw. ihrer Lösungen kann der US-Schrift nicht entnommen werden.

US 4,429,073 beschreibt wasserlösliche Polyetherimide, die beispielsweise aus der Reaktion von Bis-(etheranhydriden) mit Polyaminen zugänglich sind. Nach der Spaltung des Imids mit Wasser in Gegenwart eines Amins, kann durch Zugabe einer trifunktionellen Isocyanatkomponente eine Quervemetzung erfolgen, die durch eine Blockierung am Isocyanat begünstigt wird. In den Ausfiihrungsbeispielen werden ein Alkohol, bzw. Phenol als Blockierungsmittel verwendet. Die erhaltenen, vernetzten Beschichtungen weisen nicht für alle Anforderungen eine ausreichende Flexibilität und Haftung auf.

Auch im nicht wässrigen Bereich sind Polyamidimide und Polyimide wohl bekannt. So werden in DE 1770202 A1 und die DE 3332033 A1 hochmolekulare Polyamidimide aus Polycarbonsäureanhydriden, Lactamen und Polyisocyanaten synthetisiert, wobei diese unter Ringöffnung des Lactams aneinander addiert werden. Die entstehenden Polymere zeichnen sich durch eine besondere Temperaturbeständigkeit aus (DE 1770202), sind jedoch hochviskos und müssen deshalb bei hohen Temperaturen verarbeitet werden. Über sonstige Qualitäten dieser Filme ist der Schrift keine Aussage zu entnehmen. Die weitere Umsetzung der Polymere mit ausgewählten Lactamen führt, wie in DE 3332033 beschrieben, zu Thermoplasten mit guten mechanischen Eigenschaften.

DE 19524437 beschäftigt sich mit niedermolekularen Amid-/Imidgruppen-haltigen blockierten Polyisocyanaten im nicht wässrigen System, die dadurch erhalten werden können, dass Polyisocyanate mit Blockierungsmitteln für Isocyanatgruppen, mindestens zwei Carboxyl- und/oder Carbonsäureanhydridgruppen aufweisenden Verbindungen und gegebenenfalls Polyhydroxyverbindungen in beliebiger Reihenfolge zur Reaktion gebracht werden. Diese Lackisocyanate dienen in einem aus zwei verschiedenen Komponenten bestehenden System zur Vernetzung mit OH-funktionellen Bindemitteln.

In den beiden japanischen Schriften JP 58-002097 und JP59-137454 wird über Lactam und blockierte Polyamidimidharze aus der Umsetzung von aromatischen Diisocyanaten mit Tricarbonsäureanhydriden und dem Blockierungsmittel in Gegenwart von basischen Lösungsmitteln berichtet. Optional können die Lactam-blockierten Polyamidimidharze auch mit Basen, weiteren blockierten Isocyanaten und Polyesterharzen umgesetzt werden, was auf eine schnellere Härtung der daraus erhaltenen Filme und eine Verbesserung der Flexibilität und des Hitzeschocks der erhaltenen Beschichtungen zielt.

Die DE 32 40 934 A1 beschreibt Verfahren zur Herstellung von Polyamidimid-Harzen. Allerdings gibt es keinen Hinweis darauf, dass diese Harze in wässrigen Lösungen eingesetzt werden können. Darüber hinaus offenbart D1 ebenfalls die Neutralisation von Polyamidimid-Harzen mit Basen nicht.

Aus der JP 2005 120134 A sind wasserlösliche Polyamidimide bekannt, die durch Umsetzung von aromatischen Polyisocyanaten und tribasischen Säureanhydriden erhalten werden. In dem Dokument findet sich jedoch kein Hinweis darauf, die Umsetzung dieser Verbindungen in Anwesenheit mindestens einem NH-funktionellen Lactam und/oder 3,5-Dimethylpyrazol und/oder Butanonoxim durchzuführen.

In der US 4,259,221 ist ein Verfahren zur Herstellung einer wässrigen Lösung von Polyamidimid beschrieben. Die wässrige Lösung wird erhalten, indem ein bereits synthetisiertes Polyamidimid-Harz gespalten wird.

Die US 4,259,221 beschreibt Verfahren zur Herstellung von Polyamidimid-Harzen. Nicht offenbart ist, diese Harze in wässrigen Lösungen einzusetzen. Auch die Neutralisation von Polyamidimid-Harzen mit Basen ist nicht beschrieben.

Die EP 1 640 395 A, US 5,723,536 und EP 942 023 A offenbaren jeweils Verfahren zur Herstellung von blockierten Isocyanaten. Aus keinem dieser Dokumente ergibt sich ein Hinweis auf die Verwendung von Carbonsäureanhydriden. Damit offenbaren diese Dokumente auch nicht Verfahren zur Herstellung von wässrigen Polyamidimid-Harzen mit blockierten NCO-Gruppen.

Überraschend wurde nun gefunden, dass wässrige Lösungen von Polyamidimiden, bzw. Polyimiden gerade dann leicht zu verarbeiten sind und nach dem Einbrennen Beschichtungen mit hohen Beständigkeit und hoher Flexibilität liefen, wenn die NCO-Gruppen der Polymerketten bei der Herstellung teilweise blockiert werden.

Gegenstand der Erfindung ist ein Verfahren zur Herstellung wässriger Lösungen NCO-Gruppen blockierter Harze mit zahlenmittleren Molekulargewichten (Mₙ) von 1.000 bis 7.000 g/mol, welche Polyimidstrukturen und gegebenenfalls auch Polyamidstrukturen aufweisen, dadurch gekennzeichnet, dass zunächst aus
a) mindestens einem Polyisocyanat
b) mindestens einem Tricarbonsäuremonoanhydrid und/oder mindestens einem Tetracarbonsäureanhydrid sowie
   b1) gegebenenfalls Tricarbonsäuren und/oder Tetracarbonsäuren und
   b2) gegebenenfalls Dicarbonsäuren,
c) mindestens einem NH-funktionellen Lactam und/oder 3,5-Dimethylpyrazol und/oder Butanonoxim
   ein Polymer hergestellt wird, zu dem gegebenenfalls weitere Mengen an
d) mindestens einem Tricarbonsäuremonoanhydrid und/oder mindestens einem Tetracarbonsäureanhydrid sowie
   d1) gegebenenfalls Tricarbonsäuren und/oder Tetracarbonsäuren und
   d2) gegebenenfalls Dicarbonsäuren,
   zugegeben werden,
   wobei die Menge an Isocyanatgruppen der Komponente a) zur Gesamtsumme aus den Mengen der isocyanatreaktiven Gruppen der Komponenten b), b1), b2), d), d1) und d2) in einem molaren Verhältnis von 0,90 zu 1 bis 1,3 zu 1, und die Menge an Isocyanatgruppen der Komponente a) zur Menge an isocyanatreaktiven Gruppen der Komponente c) in einem molaren Verhältnis von 1 zu 0,05 bis 1 zu 0,35, eingesetzt wird,
   die Reaktionsmischung anschließend mit
e) einer Base
   umgesetzt wird, wobei
   die Menge an Säure- und/oder Säureanhydridgruppen der Komponenten b), b1), b2), d), d1) und d2) zur Menge an basisch wirkenden Gruppen der Komponente e) in einem molaren Verhältnis von 1 zu 0,5 bis 1 zu 4 verwendet wird,
   und das so erhaltene Harz abschließend in Wasser gelöst wird;
   wobei das Wasser zu dem Harz gegeben werden kann, oder aber das Harz dem Wasser zugegeben wird.

Desweiteren sind die nach diesem Verfahren erhältlichen wässrigen Lösungen selbst ein Gegenstand der Erfindung.

Unter einer Lösung ist im Rahmen dieser Erfindung eine homogene Lösung oder eine kolloidale Lösung bis hin zu einer feinteiligen Dispersion zu verstehen. Der Begriff wasserlöslich beinhaltet in dieser Schrift auch wasserdispergierbar.

Bevorzugt weisen die wasserlöslichen NCO-Gruppen blockierten Polyimidstruktur- und gegebenenfalls auch Polyamidstruktur-aufweisenden Harze zahlenmittlere Molekulargewichte (Mₙ) von 1.000 bis 6.000 und besonders bevorzugt von 1.200 bis 5.000 g/mol auf.

Bevorzugt wird die Menge an Isocyanatgruppen der Komponente a) zur Gesamtsumme aus den Mengen der isocyanatreaktiven Gruppen der Komponenten b), b1), b2), d), d1) und d2) in einem molaren Verhältnis von 0,95 zu 1 bis 1,15 zu 1, die Menge an Isocyanatgruppen der Komponente a) zur Menge an isocyanatreaktiven Gruppen der Komponente c) in einem molaren Verhältnis von 1 zu 0,05 bis 1 zu 0,35, und die Menge an basisch wirkenden Gruppen der Komponente e) zur Menge an Säure- und/oder Säureanhydridgruppen der Komponenten b), b1), b2), d), d1) und d2) in einem molaren Verhältnis von 1 zu 1 bis 2 zu 1 verwendet.

Zur Herstellung der in den erfindungsgemäßen Lösungen vorliegenden Harze eignen sich als Polyisocyanate a) aromatische Polyisocyanate, aliphatische oder cycloaliphatische Polyisocyanate. Bevorzugte Polyisocyanate sind solche mit einem einheitlichen oder im Mittel durchschnittlichen Molekulargewicht von 140 bis 500 g/mol, mit einer im statistischen Mittel durchschnittlichen NCO-Funktionalität von maximal 2,6.

Solche Polyisocyanate sind beispielsweise 1,4-Phenylendiisocyanat, 2,4- und 2,6-Diisocyanatotoluol (TDI) sowie beliebige Gemische dieser Isomeren, 4,4'-, 2,4'- und 2,2'-Diisocyanatodiphenylmethan (MDI) oder beliebige Gemische dieser Isomeren oder Gemische dieser Isomeren mit ihren höheren Homologen, wie sie in an sich bekannter Weise durch Phosgenierung von Anilin/ Formaldehyd-Kondensaten erhalten werden, 1,5-Naphthylendiisocyanat 1,4-Butandiisocyanat, 2- Methylpentan-1,5-diisocyanat, 1,5-Hexandiisocyanat, 1,6-Hexandiisocyanat (HDI), 1,3- und 1,4-Cyclohexandiisocyanat sowie beliebige Gemische dieser Isomeren, 2,4- und 2,6-Diisocyanato-1-methylcylohexan sowie beliebige Gemische dieser Isomeren, 3,5,5-Trimethyl-3-isocyanatomethylcylohexanisocyanat und Dicyclohexylmethan-2,4'- und -4,4'-Diisocyanat sowie beliebige Gemische dieser Diisocyanate.

Bevorzugt werden als Polyisocyanate a) solche mit an aromatischen Fragmenten gebundenen Isocyanatgruppen mit einer im statistischen Mittel durchschnittlichen NCO-Funktionalität von 2 bis 2,2 und eines gegebenenfalls im statistischen Mittel durchschnittlichen Molekulargewichts von 174 bis 300 g/mol eingesetzt.

Ganz besonders bevorzugt einzusetzende Diisocyanate sind 4,4'-, 2,4'- und 2,2'-Diisocyanatodiphenylmethan oder beliebige Gemische dieser Isomeren.

Als Komponente b) kommen cyclische Tricarbonsäuremonoanhydride wie Trimellitsäureanhydrid, Hemimellitsäureanhydrid und Benzophenon-3,4,3'-tricarbonsäureanhydrid sowie Tetracarbonsäuredianhydride wie Pyromellitsäureanhydrid und Benzophenon-3,3',4,4'-tetracarbonsäuredianhydrid oder Mischungen dieser Verbindungen in Betracht. Bevorzugt sind Tricarbonsäuremonoanhydride wie Trimellitsäureanhydrid, Hemimellitsäureanhydrid und Benzophenon-3,4,3'-tricarbonsäureanhydrid. Besonders bevorzugte Komponente b) ist Trimellitsäureanhydrid.

Optional können auch die aus den Komponenten b) durch Hydrolyse entstandenen Tri- bzw. Tetracarbonsäuren b1) zumindest anteilig eingesetzt werden.

Optional können anteilig auch aliphatische, alicyclische oder aromatische Dicarbonsäuren bzw. deren Anhydride b2) eingesetzt werden, um die Eigenschaften der Beschichtungen entsprechend der Anforderungen zu verändern. Auf diese Weise kann z.B. eine Elastifizierung der Beschichtung erfolgen. Als Komponente b2) kommen Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthalund Hexahydrophthalsäure sowie Säureanhydride, wie o-Phthal- oder Bernsteinsäureanhydrid in Frage.

Als Blockierungsmittel c) für die NCO Gruppen der Komponente a) kommen 3,5-Dimethylpyrazol, Butanonoxim sowie Lactame mit sekundären Amidstickstoffatomen in Frage, wie z.B. ε-Caprolactam, δ-Valerolactam und Butyrolactam. Bevorzugte Komponente c) sind 3,5-Dimethylpyrazol sowie ε-Caprolactam. Besonders bevorzugte Komponente c) ist ε-Caprolactam. Ebenfalls geeignet als Blockierungmittel c) sind Mischungen der genannten Blockierungsmittel c). Besonders geeignet sind Mischungen aus 3,5-Dimethylpyrazol und ε-Caprolactam im molaren Verhältnis von 0,1 zu 0,9 bis 0,9 zu 0,1.

Unabhängig voneinander kommen als Komponente d), d1) und d2) die gleichen Verbindungen in Betracht, die bereits als Komponente b), b1) und b2) aufgeführt wurden.

Als Komponente e) kommen z.B. mit Alkylgruppen substituierte Amine, die keine weiteren funktionellen Gruppen tragen in Betracht. Dazu gehören Propylamin, Butylamin, Dibutylamin, Trimethylamin, Triethylamin, Tributylamin, Dimethylisopropylamin, Ethyldiisopropylamin, Dimethylcyclohexylamin, N-Methylmorpholin und N-Ethylmorpholin. Darüber hinaus sind auch weitere organische Amine e), die weitere reaktive Gruppen aufweisen geeignet, wie z.B. Ethanolamin, Diethanolamin, N,N-Dimethylethanolamin, N-Methyldiethanolamin und Triethanolamin. Bevorzugt sind solche Amine, die trialkylsubstituiert sind, wie z.B. Trimethylamin, Triethylamin, Tributylamin, Dimethylisopropylamin, Ethyldiisopropylamin, Dimethylcyclohexylamin, N-Methylmorpholin, N-Ethylmorpholin, N,N-Dimethylethanolamin, N-Methyldiethanolamin sowie Triethanolamin. Besonders bevorzugt kommen als Komponente e) tertiäre Amin- und OH-Gruppen tragende Verbindungen in Betracht, wie N,N-Dimethylethanolamin, N-Methyldiethanolamin und Triethanolamin.

Zur Reduktion der Viskosität der Harze werden bevorzugt Lösungsmittel verwendet, die die Löse- bzw. Dispergierfähigkeit des Harzes ermöglichen. Als Lösungsmittel kommen solche in Frage, die keine gegenüber Isocyanaten reaktiven Gruppen aufweisen und in der Lage sind, die Harze bei Temperaturen unterhalb von 150°C zu lösen. Zu dieser Gruppe der Lösungsmitteln gehören Dimethylsulfoxid, Dimethylacetamid, Dipropylenglykoldimethylether, N-Methylpyrrolidon, N-Ethylpyrrolidon, N-Cyclohexylpyrrolidon, N-Octylpyrrolidon, N-Methylbutyrolactam, N-Methylvalerolactam und N-Methylcaprolactam in Frage. Bevorzugte Lösungsmittel sind N-Methylpyrrolidon, N-Ethylpyrrolidon, N-Methylbutyrolactam, N-Methylvalerolactam und N-Methylcaprolactam. Besonders bevorzugte Lösungsmittel sind N-Methylpyrrolidon sowie N-Ethylpyrrolidon. Mischungen aus den genannten Lösungsmitteln sind ebenfalls geeignet, insbesondere solche Mischungen aus N-Ethylpyrrolidon mit N-Methylpyrrolidon, Dimethylsulfoxid, Dimethylacetamid oder Dipropylenglykoldimethylether.

Die Menge des Lösungsmittels wird so bemessen, dass ein zügiges Entweichen des durch die Reaktion von Isocyanat- mit Carbonsäuregruppen entstehenden Kohlendioxids möglich ist. Auf diese Weise wird einem Ausschäumen der Mischung im Reaktionskessel vorgebeugt. Zudem soll die Lösungsmittelmenge so gewählt werden, dass die Viskosität der Harze so niedrig ist, dass sie sich anschließend in Wasser lösen, bzw. dispergieren lassen. Damit ist die für eine erfolgreiche Dispergierung notwendige Viskosität u.a. auch von der Effektivität des Dispergierapparates abhängig.

Bevorzugt beträgt die Lösemittelmenge bezogen auf die Summe der eingesetzten Rohstoffe a), b), b1), b2), d), d1), d2) und c) 20 bis 100 Gew.%, bevorzugt 30 bis 90 Gew.% und besonders bevorzugt 40 bis 80 Gew.%.

Die Herstellung der erfindungsgemäßen Lösungen erfolgt in mehreren Schritten. Zunächst werden die Komponenten a) bis c) in beliebiger Reihenfolge bei Temperaturen von 20 bis 80 °C miteinander zur Reaktion gebracht, mit der Maßgabe, dass bei der Zugabe der Komponente c) mindestens die equimolare Menge an NCO Gruppen gegenüber steht und somit der vollständige Einbau der Komponente gewährleistet ist. Die Temperaturführung oder aber auch die Geschwindigkeit mit der die Komponenten zugegeben werden, wird so gewählt, dass die CO₂ Entwicklung kontrolliert abläuft und ein Austreten der Reaktionsmischung aus dem Reaktionsgefäß unterbleibt. Zudem darf die gegebenenfalls entstehende Schaummenge nur so bemessen sein, dass eine ausreichende Durchmischung gewährleistet ist. Die Reaktionstemperatur wird im weiteren Verlauf der Reaktion auf ca. 110°C bis 150°C angehoben, so dass über die Zeit ein möglichst gleichmäßiger Reaktionsverlauf stattfindet. Die Reaktionsmischung wird bei der Endtemperatur solange gehalten, bis die abgeschiedene Menge an CO₂ 90 bis 120 %, bevorzugt 95 bis 110 % und ganz besonders bevorzugt 98 bis 110 % der Theorie beträgt.

In einer bevorzugten Ausführungsform werden das Blockierungsmittel c) sowie die Komponenten b), b1) und b2) komplett oder auch nur zum Teil vorgelegt und mit einem Teil oder aber auch der gesamten Lösungsmittelmenge verdünnt. Die Komponenten können bei Temperaturen von 10°C bis 150°C vermischt werden, bevorzugt findet die Vermischung aber bei 20 bis 80°C statt. Nachdem die Rohstoffe komplett gelöst sind, erfolgt die vollständige oder aber auch die stufenweise Zugabe der Komponente a), und gegebenenfalls zurückgehaltener Mengen an b), b1), b2) und/oder c) bei Temperaturen von 20°C bis 80°C. Gegebenenfalls zurückgehaltene Mengen an Lösemittel können an jeder beliebigen Stelle zudosiert werden. Weiterhin wird wie oben beschrieben verfahren.

Ebenfalls bevorzugt ist es, die Komponente a) vorzulegen und die Komponenten b), b1), b2) und c) einzeln oder in Mischung, bevorzugt in Mischung, bei den oben bereits angeführten Temperaturen komplett oder stufenweise zuzudosieren.

Es ist auch möglich zunächst gemäß einer der vorstehenden Ausführungsformen zu verfahren und dann zur Lösung des entstandenen Polymers die Komponenten d), d1) und/oder d2) hinzu zu geben, so dass die Menge an Isocyanatgruppen der Komponente a) zur Gesamtsumme aus den Mengen der isocyanatreaktiven Gruppen der Komponenten b), b1), b2), d), d1) und d2) in einem molaren Verhältnis von 0,90 zu 1 bis 1,3 zu 1, bevorzugt 0,95 zu 1 bis 1,15 zu 1 vorliegt.

Nachdem die angestrebte CO₂ Menge in einer der gewählten Ausführungsformen abgespalten ist, bzw. gegebenenfalls Komponente d), d1) und/oder d2) der Polymerlösung zugegeben ist, wird Komponente e) bei Temperaturen von 10 bis 100°C, bevorzugt 30 bis 80°C, besonders bevorzugt 40 bis 80°C zugesetzt und für 0,5 bis max. 20 h verrührt.

Anschließend wird der Harzlösung unter Scherung Wasser zugesetzt. Die Menge des Wassers wird so bemessen, dass der Feststoffgehalt der wässrigen Harze 10 bis 40 Gew.-%, bevorzugt 15 bis 35 Gew.-% und besonders bevorzugt 20 bis 30 Gew.-% beträgt.

Die Temperatur des Wassers beträgt 20 bis 100°C, bevorzugt 40 bis 80°C und besonders bevorzugt 50 bis 80°C. Die Mischung wird solange bei ausreichendem Energieeintrag gerührt, bis eine homogene Lösung bzw. eine feinteilig Dispersion erhalten ist. Anschließend wird die wässrige Lieferform des Harzes abgekühlt.

In einer weiteren Ausführungsform wird nicht das Wasser dem Harz sondern das Harz dem Wasser - bei ansonsten im Vergleich zur ersten Ausführungsform unveränderten Bedingungen - zugeführt.

Die erhaltenen erfindungsgemäßen wässrigen Lösungen NCO-Gruppen blockierter Polyamidimid-, bzw. Polyimidharze können als Beschichtungsmittel bzw. zur Herstellung von Beschichtungsmitteln verwendet werden. Bevorzugt werden sie allein als thermisch härtbares 1K-Einbrennsystem appliziert. Sie können aber auch in Abmischung mit vorzugsweise OH-funktionellen, aber auch mit OH-Gruppen freien, wässrigen Bindemitteln abgemischt und als 1K- Einbrennsystem verarbeitet werden. Als wässrige Bindemittel kommen die in der Lackchemie üblichen OH-gruppenhaltigen oder OH-gruppenfreien primären oder sekundären Polyacrylatdispersionen, sekundäre Polyester-Polyacrylatdispersionen, Polyurethandispersionen in Betracht.

Weitere Gegenstände der vorliegenden Erfindung sind Beschichtungsmittel erhältlich unter Verwendung der erfindungsgemäßen wässrigen Lösungen NCO-Gruppen blockierter Polyimidstruktur- und gegebenenfalls auch Polyamidstruktur-aufweisender Harze, sowie die daraus erhältlichen Beschichtungen und beschichteten Substrate.

Die erfindungsgemäßen Beschichtungsmittel können auf Substrate wie z.B. Metall, Kunststoff, Glas oder mineralische Untergründe sowie auch auf bereits beschichtete Untergründe aufgebracht werden. Eine bevorzugte Anwendung ist die Verwendung der erfindungsgemäßen Beschichtungsmittel zur Herstellung von Beschichtungen auf Metall. Eine besonders bevorzugte Anwendung ist die Verwendung der erfindungsgemäßen Beschichtungsmittel zur Beschichtung von Metallemballagen, im besonderen im Bereich Can-Coating.

Die erfindungsgemäßen Beschichtungsmittel können gegebenenfalls auch die an sich aus der Lacktechnologie bekannten Hilfs- und Zusatzmittel wie z.B. Füllstoffe und Pigmente enthalten.

Der Auftrag der Beschichtungsmittel kann auf bekannte Weise, z.B. durch Streichen, Gießen, Rakeln, Spritzen, Sprühen, Schleudern, Walzen oder Tauchen erfolgen.

Das Einbrennen der Beschichtungen erfolgt nach vorangegangener Trocknung - dem Ablüften - der Beschichtung bei Raumtemperatur in einem einstufigen oder mehrstufigen Verfahren. Bevorzugt findet das Einbrennen in einem zweistufigen Prozess statt, bei dem zunächst für 1 bis 20 Minuten, bevorzugt 2 bis 10 Minuten eine Trocknung bei 50 bis 130°C, bevorzugt bei 70 bis 100°C erfolgt, und anschließend im zweiten Schritt eine Trocknung für 1 bis 10 Minuten, bevorzugt 2 - 7 Minuten bei Temperaturen zwischen 180 und 300°C, bevorzugt 200 - 280 °C erfolgt. Die Erhöhung der Temperatur kann in entsprechenden Öfen auch kontinuierlich erfolgen, um ein optimales Einbrennen zu gewährleisten.

### Beispiele

Die Viskosität wurde mit einem Kegel-Platte Viskosimeter Physika MC 51 der Fa. Anton Paar gemessen.

IR-Spektroskopie wurde an einem FTIR-Spektroskop, MB-Series, der Fa. Bomem durchgeführt.

Bestimmungsmethode Festkörpergehalt: Trocknung der wässrigen Lösung für 3h bei 200°C im Umluftofen.

GPC: Als Eluent wurde N,N-Dimethylacetatamid bei einer Flussrate von 0,6 ml/ min verwendet. Als stationäre Phase wurden vier Säulen, HEMA 3000, HEMA 300, HEMA 40, HEMA 40, der Fa. Polymer Standards Service, Mainz, Deutschland verwendet. Jede Säule weist eine Länge von 300 mm und einen Durchmesser von 8 mm auf. Die Teilchengröße des Füllmaterials beträgt 10 µm.

### Beispiel 1

### a) Herstellung eines Polyamidimidharzes 1

282,5 g ε-Caprolactam und 1920 g Trimellitsäureanhydrid wurden in einem Dreihalskolben bestückt mit KPG-Rührer eingewogen. Über ein Gasableitungsrohr war der Kolben mit einem Gaszähler verbunden, um die während der Reaktion entstehende CO₂-Menge zu bestimmen. Der Rohstoffmischung wurden 3932,5 g N-Ethylpyrrolidon zugesetzt. Innerhalb von 5 Minuten wurden der homogenen Mischung bei Raumtemperatur 2500 g 4,4'-Diisocyanatodiphenylmethan zugesetzt, bevor die Temperatur innerhalb von 30 Minuten auf 80°C angehoben wurde. Ab ca. 65°C war eine exotherme Reaktion sowie Gasentwicklung zu beobachten. Mit Erreichen von 83°C wurde die Temperatur halbstündlich um 10°C bis auf eine Endtemperatur von 133°C erhöht. Bei dieser Temperatur wurde die Reaktionsmischung so lange gehalten bis 100 % (17,5 mol) der theoretisch angegebenen CO₂ Menge am Gaszähler detektiert wurden. Am Ende der Umsetzung waren IR-spektroskopisch keine nennenswerten Mengen an NCO-Gruppen im typischen Kummulenbereich bei ca 2100 cm⁻¹ mehr nachweisbar.
Viskosität (Mischung 1 Gew.-Tl. Harz mit 3 Gew.-Tl. N-Ethylpyrrolidon): 1000 mPa s bei 23°C, (D = 100 s⁻¹)
Mₙ = 3.900 g/mol; M_{w} = 9.112 g/mol

### b) Herstellung der wässrigen Lösung 1

850,4 g der auf 80°C temperierten Harzlösung wurden mit 254,5 g Dimethylethanolamin unter rühren versetzt. Nach vollständiger Homogenisierung der Mischung wurde das neutralisierte Harz bei 80°C mit 1000 g Wasser, das auf 70°C temperiert war, innerhalb von 10 Minuten versetzt. Anschließend wurde für 2h bei 90°C nachgerührt. Eine transparente, rötlich braun gefärbte Lösung wurde erhalten.
Festkörpergehalt: 21 %
Viskosität: 1900 m Pa s bei 23°C (D = 1000 s⁻¹)
Mₙ = 3.770 g/mol; M_{w} = 8.098 g/mol

### Beispiel 2

### a) Herstellung eines Polyamidimidharzes 2

240 g 3,5-Dimethylpyrazol und 1920 g Trimellitsäureanhydrid wurden in einem Dreihalskolben bestückt mit KPG-Rührer eingewogen. Über ein Gasableitungsrohr war der Kolben mit einem Gaszähler verbunden, um die während der Reaktion entstehende CO₂-Menge zu bestimmen. Der Rohstoffmischung wurden 3800 g N-Ethylpyrrolidon zugesetzt. Innerhalb von 5 Minuten wurde der homogenen Mischung bei Raumtemperatur 2500 g 4,4'-Diisocyanatodiphenylmethan zugesetzt, bevor die Temperatur innerhalb von 30 Minuten auf 80°C angehoben wurde. Ab ca. 65°C war eine exotherme Reaktion sowie Gasentwicklung zu beobachten. Mit Erreichen von 83°C wurde die Temperatur halbstündlich um 10°C bis auf eine Endtemperatur von 133°C erhöht. Bei dieser Temperatur wurde die Reaktionsmischung so lange gehalten bis ca. 104% der theoretisch angegebenen CO₂ Menge am Gaszähler detektiert wurden. Am Ende der Umsetzung waren IR-spektroskopisch keine nennesswerte Mengen an NCO-Gruppen mehr nachweisbar.
Viskosität (Mischung 1 Gew-Tl. Harz mit 3 Gew.-Tl. N-Ethylpyrrolidon): 4.380 mPa s bei 23°C (D =100 s⁻¹)
Mₙ = 4.980 g/mol; M_{w} = 16.740 g/mol

### b) Herstellung der wässrigen Lösung 2

850,4 g der auf 80°C temperierten Harzlösung wurden mit 254,5 g Dimethylethanolamin unter rühren versetzt. Nach vollständiger Homogenisierung der Mischung wurde das neutralisierte Harz bei 80°C mit 1000 g Wasser, das auf 70°C temperiert war, innerhalb von 10 Minuten versetzt. Anschließend wurde für 2h bei 90°C nachgerührt. Eine transparente, rötlich braun gefärbte Lösung wurde erhalten.
Festkörpergehalt: 22 %
Viskosität: 2510 mPa s bei 23°C (D = 1000 s⁻¹)
Mₙ = 4.490 g/mol; M_{w} = 12.990 g/mol

### Vergleichsbeispiel 3 (analog Bsp. 1 JP 2005 120134)

### a) Herstellung eines blockierungsmittelfreien Polyamidimidharzes 3

1920 g Trimetllitsäureanhydrid wurden in einem Dreihalskolben bestückt mit KPG-Rührer eingewogen. Über ein Gasableitungsrohr war der Kolben mit einem Gaszähler verbunden, um die während der Reaktion entstehende CO₂-Menge zu bestimmen. Der Rohstoffmischung wurden 5508 g N-Ethylpyrrolidon zugesetzt. Innerhalb von 5 Minuten wurde der homogenen Mischung bei Raumtemperatur 2500 g 4,4'-Diisocyanatodiphenylmethan zugesetzt, bevor die Temperatur innerhalb von 30 Minuten auf 80°C angehoben wurde. Mit Erreichen von 80°C wurde die Temperatur halbstündlich um 10°C bis auf eine Endtemperatur von 130°C erhöht. Bei dieser Temperatur wurde die Reaktionsmischung so lange gehalten bis ca. 90 % der theoretisch angegebenen CO₂ Menge am Gaszähler detektiert wurden.
Viskosität (100% Harz): 89.900 mPa s bei 23° (D = 100 s⁻¹)
Mₙ = 9.770 g/mol; M_{w} = 40.580 g/mol

### b) Herstellung der wässrigen Lösung 3

135 g der Polyamidimidlösung 3 wurden auf 50°C erwärmt mit 22,4 g Triethylamin versetzt und für 20 Minuten gerührt. Anschließend wurden über eine Zeitraum von 30 Minuten 67 g Wasser (Wassertemperatur: 90°C) zur Harzlösung addiert und die Mischung für 2 h verrührt. Es wurde eine transparente Lösung erhalten.
Festkörpergehalt: 23 %
Viskosität: 1200 mPa s bei 23°C (D = 1000 s⁻¹)

### Vergleichsbeispiel 4 (im Sinne von US 4259221)

### Herstellung der wässrigen Lösung 4

Zu 146,3 g des Harzes aus Bsp. 1a wurden 7,7 g einer 50 %igen Lösung eines vollständig mit ε-Caprolactam blockierten 4,4'-Diisocyanatodiphenylmethan (1 mol : 1 mol) in N-Methylpyrrolidon addiert und bei 80°C für 30 Minuten vermischt. Im Anschluss wurden bei der gleichen Temperatur 59,7 g Dimethylethanolamin addiert. Die Mischung wurde für weitere 30 Minuten verrührt. Dann wurden 136,3 g auf 70°C vorgewärmten Wassers zugegeben und für 2 h bei 85°C verrührt. Es entstand eine transparente Lösung, die nach Lagerung für 24 h bei Raumtemperatur zunächst trüb wurde und dann zu sedimentieren begann. Änderungen in der Temperaturführung während der Reaktion sowie Änderungen der Rührbedingungen brachten keine Verbesserungen, so dass das erhaltene Produkt anwendungstechnisch nicht geprüft werden konnte.

### Vergleichsbeispiel 5 (im Sinne von US 4259221; gleiche Zusammensetzung wie Beispiel 1)

### a1) Herstellung eines NCO-gruppenhaltigen Polyamidimidharzes

1920 g Trimellitsäureanhydrid wurden in einem Dreihalskolben bestückt mit KPG-Rührer eingewogen. Über ein Gasableitungsrohr war der Kolben mit einem Gaszähler verbunden, um die während der Reaktion entstehende CO₂-Menge zu bestimmen. Es wurden 3025 g N-Ethylpyrrolidon zugesetzt. Binnen 5 Minuten wurden der homogenen Mischung bei Raumtemperatur 1875 g 4,4'-Diisocyanatodiphenylmethan zugesetzt, bevor die Temperatur innerhalb von 30 Minuten auf 80°C angehoben wurde. Ab ca. 65°C war eine exotherme Reaktion sowie eine damit einhergehende Gasentwicklung zu beobachten. Mit dem Erreichen von 83°C wurde die Temperatur halbstündlich um 10°C bis auf eine Endtemperatur von 135°C erhöht. Bei dieser Temperatur wurde die Reaktionsmischung so lange gehalten, bis 91 % der theoretisch möglichen CO₂ Menge am Gaszähler detektiert wurden. Auch weiteres Erhitzen sorgte nicht für eine 100 %ige Ausbeute an CO₂.
Viskosität (Mischung 1 Gew.-T1. Harz mit 3 Gew.-Tl. N-Ethylpyrrolidon): 855 mPa s bei 23°C, (D = 100 s⁻¹)

### a2) Herstellung eines teilblockierten 4,4'-Diisocyanatodiphenylmethan

625 g 4,4'-Diisocyanatodiphenylmethan wurden in 907,5 g N-Ethylpyrrolidon gelöst und mit 282,5 g ε-Caprolactam versetzt. Es wurde 5 h bei 85°C gerührt, bis ein NCO Gehalt von 6,0 % erreicht wurde (theor. NCO-Gehalt 5,8 %).

### b) Herstellung der wässrigen Lösung 5

6160 g der unter a1) erhaltenen Harzlösung wurden mit 1815 g der unter a2) erhaltenen Lösung bei 50°C vermischt und bei dieser Temperatur mit 70,2 g Triethylamin versetzt. Die Mischung wurde 2 Stunden bei 50° C gerührt, bis das zweiphasige System frei von NCO-Gruppen war. Innerhalb von 10 Minuten wurden 132,8 g auf 70°C erwärmten Wassers bei intensivem Rühren zu der Harzlösung addiert. Nach 5 Minuten wurde eine trübe dünnflüssige Lösung erhalten, die auch nach weiterem Rühren nicht klar wurde. Das Produkt wies schon nach 24 h Lagerung bei Raumtemperatur ein Sediment auf, das sich auch durch Aufschütteln nicht redispergieren ließ.

### Vergleichsbeispiel 6 (im Sinne von US 4429073)

### a) Herstellung eines blockierungsmittelfreien Polyamidimidharzes (s. Vergleichsbsp. 3a)

### b) Herstellung der wässrigen Lösung 6 (s. Vergleichsbsp. 3b)

Zu 500 g der unter Vergleichsbsp. 3b erhaltenen transparenten Lösung wurden unter Rühren innerhalb von 20 Minuten bei 40 °C 11,5 g eines ε-Caprolactam blockierten Trimerisats auf der Basis von 2,4-Toluylendiisocyanat, gelöst in 20 g N-Ethylpyrrolidon, addiert. Das Trimerisat wies einen blockierten NCO Gehalt von 14,0 Gew.% auf. Nachdem über einen Zeitraum von 3 h intensiv gerührt wurde, wurde eine trübe Lösung erhalten.
Festkörpergehalt: 24 %
Viskosität: 1500 mPa s bei 23°C (D = 1000 s⁻¹)

### Lacktechnische Prüfung der Produkte

Durch Mischen der amidimidhaltigen erfindungsgemäßen, wässrigen Polymere mit den in der Tabelle 1 aufgeführten Komponenten wurden Klarlacke erhalten.
Byk^{®} 346, Untergrundbenetzer, der Fa. Byk in Wesel, Deutschland
Entschäumer T^{®} der Fa. Borchers GmbH in Langenfeld, Deutschland

**Tabelle 1**

| | **Beispiel 1** | **Beispiel 2** | **Vergleich Beispiel 3** | **Vergleich Beispiel 6** |
|---|---|---|---|---|
| Polyamidimid | 93,7 Tl Lösung 1 | 93,7 Tl Lösung 2 | 93,7 Tl Lösung 3 | 91,5 Tl Lösung 3 |
| Entschäumer T | 0,8 Tl | 0,8 Tl | 0,8 Tl | 0,8 Tl |
| Byk^{®} 346 | 0,5 Tl | 0,5 Tl | 0,5 Tl | 0,5 Tl |
| Dipropylenglykol | 5,0 Tl | 5,0 Tl | 5,0 Tl | 5,0 Tl |

Die obigen Klarlacke wurden auf Aluminiumplatten, Bonder 722 der Firma Chemetall, Frankfurt/Main, Deuschland mit einem Rakel (50 µm) appliziert und für 5 Minuten bei 80°C vorgetrocknet, anschließend für 4 Minuten bei 260°C im Umluftofen eingebrannt. Es ergaben sich Trockenfilmschichtstärken von ca. 8-10 µm.

Mit den Produkten aus Vergleichsbeispiel 3 und 6 konnte kein geschlossener Film erhalten werden.

### Tests:

*DMF-Beständigkeit (1 Std. bei RT):* Ein kleiner Wattebausch oder ein Zellstoffquadrat wurde mit der Prüfsubstanz getränkt und auf die Lackoberfläche gelegt. Durch Abdecken mit einem Uhrglas wurde die Verdunstung der Prüfsubstanz vermieden. Der Wattebausch bzw. der Zellstoff durfte nicht austrocknen. Nach der vorgeschriebenen Belastungsdauer wurde die Prüfsubstanz entfernt, die belastete Stelle abgetrocknet und sofort abgemustert, um einer Regeneration der Lackoberfläche zuvorzukommen.

*MEK-Wischtest (Druck 1 kg):* Auf dem Wägeteller der Waage wurde mittels Filmklammer und Antirutschfolie das Prüfblech befestigt. Die Waage wurde mit Hilfe des 100 g-Gewichtsteins justiert. Ein mit MEK getränkter Wattebausch wurde gegen den ausgewählten Prüfdruck auf dem Lackfilm hin und her bewegt, bis der Lackfilm zerstört war.

**Tabelle 2: Eigenschaften der Beschichtungen**

| | **Erfindungsgemäße Beispiele** | | **Vergleichsbeispiele** |
|---|---|---|---|
| | **1** | **2** | **3 und 6** |
| Haftung Gitterschnitt* | 0 | 0 | Es konnten keine geschlossenen Filme erhalten werden |
| Haftung Gitterschnitt** nach Schlagbelastung | 0 | 0 | |
| DMF-Beständigkeit | 3 | 1-2 | |
| NMP-Beständigkeit | 2 | 3 | |
| MEK-Wischtest*** | > 100 | > 100 | |
| Impact-Test**** | > 80 | 70 - 80 | |
| T-Bend-Test | T2 | T2 | |
| Nach ECCA T 7 | | | |

| | | | |
|---|---|---|---|
| * Beurteilung nach DIN EN ISO 2409: 0= gut, 5 = schlecht ** Beurteilung nach DIN EN ISO 2409: 0= gut, 5 = schlecht. Anschließende Schlagprüfung der geschädigten Stelle mit Impact-Schlagprüfgerät Modell 304 der Fa. Erichsen (Belastung 30 pound/inch) *** Die Anzahl der durchgeführten Doppelhübe bis zur Zerstörung der Beschichtung ist im Prüfbericht anzugeben, wobei maximal 100 Doppelhübe zu verrichten sind. Nach 100 Doppelhüben wurde der Film hinsichtlich Veränderungen (Matt werden, Erweichung) abgemustert. **** Ein beschichtetes Blech wurde einer definierten Schlagbeanspruchung unterworfen. Diese Beanspruchung erfolgte durch ein Fallgewicht mit Kugelbolzen. Die Beanspruchung erfolgte direkt auf der Lackierung. Die Fallhöhe, bis zu der keine Rissbildung beim Verformen des Bleches auftrat, wurde nach Umrechung als Maß (Angabe in "inch per pound") für die Schlagelastizität angegeben. | | | |

Auf Grund des im Falle der erfindungsgemäßen Beispiele 1 und 2 erhaltenen Eigenschaftsspektrums sind diese Systeme für die Beschichtung von Metallemballagen, so z.B. für Can-Coating-Anwendungen, insbesondere für die Innenbeschichtung von Aerosoldosen geeignet.

## Patentansprüche

1. Verfahren zur Herstellung wässriger Lösungen NCO-Gruppen blockierter Harze mit zahlenmittleren Molekulargewichten (Mₙ) von 1.000 bis 7.000 g/mol, welche Polyimidstrukturen und gegebenenfalls auch Polyamidstrukturen aufweisen, **dadurch gekennzeichnet, dass** zunächst aus
a) mindestens einem Polyisocyanat
b) mindestens einem Tricarbonsäuremonoanhydrid und/oder mindestens einem Tetracarbonsäureanhydrid sowie
b1) gegebenenfalls Tricarbonsäuren und/oder Tetracarbonsäuren und
b2) gegebenenfalls Dicarbonsäuren,
c) mindestens einem NH-funktionellen Lactam und/oder 3,5-Dimethylpyrazol und/oder Butanonoxim
ein Polymer hergestellt wird, zu dem gegebenenfalls weitere Mengen an
d) mindestens einem Tricarbonsäuremonoanhydrid und/oder mindestens einem Tetracarbonsäureanhydrid sowie
d1) gegebenenfalls Tricarbonsäuren und/oder Tetracarbonsäuren und
d2) gegebenenfalls Dicarbonsäuren,
zugegeben werden,
wobei die Menge an Isocyanatgruppen der Komponente a) zur Gesamtsumme aus den Mengen der isocyanatreaktiven Gruppen der Komponenten b), b1), b2), d), d1) und d2) in einem molaren Verhältnis von 0,90 zu 1 bis 1,3 zu 1, und die Menge an Isocyanatgruppen der Komponente a) zur Menge an isocyanatreaktiven Gruppen der Komponente c) in einem molaren Verhältnis von 1 zu 0,05 bis 1 zu 0,35, eingesetzt wird,
die Reaktionsmischung anschließend mit
e) einer Base
umgesetzt wird, wobei
die Menge an Säure- und/oder Säureanhydridgruppen der Komponenten b), b1), b2), d), d1) und d2) zur Menge an basisch wirkenden Gruppen der Komponente e) in einem molaren Verhältnis von 1 zu 0,5 bis 1 zu 4 verwendet wird,
und das so erhaltene Harz abschließend in Wasser gelöst wird.

2. Verfahren zur Herstellung wässriger Lösungen NCO-Gruppen blockierter Harze gemäß Anspruch 1, **dadurch gekennzeichnet, dass** die Harze zahlenmittlere Molekulargewichte (Mₙ) von 1.200 bis 5.000 g/mol besitzen.

3. Verfahren zur Herstellung wässriger Lösungen NCO-Gruppen blockierter Harze gemäß Anspruch 1 oder 2, **dadurch gekennzeichnet, dass** die Menge an Isocyanatgruppen der Komponente a) zur Gesamtsumme aus den Mengen der isocyanatreaktiven Gruppen der Komponenten b), b1), b2), d), d1) und d2) in einem molaren Verhältnis von 0,95 zu 1 bis 1,15 zu 1, die Menge an Isocyanatgruppen der Komponente a) zur Menge an isocyanatreaktiven Gruppen der Komponente c) in einem molaren Verhältnis von 1 zu 0,05 bis 1 zu 0,35, und die Menge an basisch wirkenden Gruppen der Komponente e) zur Menge an Säure- und/oder Säureanhydridgruppen der Komponenten b), b1), b2), d), d1) und d2) in einem molaren Verhältnis von 1 zu 1 bis 2 zu 1 verwendet wird.

4. Verfahren zur Herstellung wässriger Lösungen NCO-Gruppen blockierter Harze gemäß einem der Ansprüche 1 bis 3, **dadurch gekennzeichnet, dass** in Komponente c) ε-Caprolactam eingesetzt wird.

5. Verfahren zur Herstellung wässriger Lösungen NCO-Gruppen blockierter Harze gemäß einem der Ansprüche 1 bis 3, **dadurch gekennzeichnet, dass** in Komponente c) Mischungen aus 3,5-Dimethylpyrazol und ε-Caprolactam im molaren Verhältnis von 0,1 zu 0,9 bis 0,9 zu 0,1 eingesetzt werden.

6. Verfahren zur Herstellung wässriger Lösungen NCO-Gruppen blockierter Harze gemäß einem der Ansprüche 1 bis 5, **dadurch gekennzeichnet, dass** zur Herstellung des Polymers zunächst das Blockierungsmittel c) sowie die Komponenten b), b1) und b2) komplett oder auch nur zum Teil vorgelegt werden, diese gelöst werden und dann die vollständige oder aber auch die stufenweise Zugabe der Komponente a) und gegebenenfalls zurückgehaltener Mengen an b), b1), b2) und/oder c) bei Temperaturen von 20°C bis 80°C erfolgt.

7. Verfahren zur Herstellung wässriger Lösungen NCO-Gruppen blockierter Harze gemäß einem der Ansprüche 1 bis 5, **dadurch gekennzeichnet, dass** zur Herstellung des Polymers zunächst die Komponente a) vorgelegt wird und die Komponenten b), b1), b2) und c) dann einzeln oder in Mischung bei Temperaturen von 20°C bis 80°C komplett oder stufenweise zudosiert werden.

8. Wässrige Lösungen NCO-Gruppen blockierter Harze, erhältlich nach einem Verfahren gemäß einem der Ansprüche 1 bis 7.

9. Verwendung wässriger Lösungen NCO-Gruppen blockierter Harze gemäß Anspruch 8 in Beschichtungsmitteln.

10. Substrate versehen mit Beschichtungen erhältlich unter Verwendung der wässrigen Lösungen NCO-Gruppen blockierter Harze gemäß Anspruch 8.

11. Substrate gemäß Anspruch 10, **dadurch gekennzeichnet, dass** diese aus Metall sind.

12. Substrate gemäß Anspruch 11, **dadurch gekennzeichnet, dass** es sich dabei um Metallemballagen handelt.

## Claims

1. Process for preparing aqueous solutions of NCO group blocked resins having number-average molecular weights (Mₙ) of 1000 to 7000 g/mol which contain polyimide structures and where appropriate polyamide structures as well, **characterized in that**
first of all from
a) at least one polyisocyanate
b) at least one tricarboxylic monoanhydride and/or at least one tetracarboxylic anhydride and also
b1) where appropriate, tricarboxylic acids and/or tetracarboxylic acids and
b2) where appropriate, dicarboxylic acids,
c) at least one NH-functional lactam and/or 3,5-dimethylpyrazole and/or butanone oxime,
a polymer is prepared, to which, where appropriate, further amounts of
d) at least one tricarboxylic monoanhydride and/or at least one tetracarboxylic anhydride and also
d1) where appropriate, tricarboxylic acids and/or tetracarboxylic acids and
d2) where appropriate, dicarboxylic acids are added,
the amount of isocyanate groups of component a) to the sum total of the amounts of the isocyanate-reactive groups of components b), b1), b2), d), d1) and d2) being used in a molar ratio of 0.90 : 1 to 1.3 : 1, and the amount of isocyanate groups of component a) to the amount of isocyanate-reactive groups of component c) being used in a molar ratio of 1 : 0.05 to 1 : 0.35,
the reaction mixture is subsequently reacted with
e) a base,
the amount of acid and/or anhydride groups of components b), b1), b2), d), d1) and d2) to the amount of basic groups of component e) being used in a molar ratio of 1 : 0.5 to 1 : 4,
and the resulting resin, lastly, is dissolved in water.

2. Process for preparing aqueous solutions of NCO group blocked resins according to Claim 1, **characterized in that** the resins possess number-average molecular weights (Mₙ) of 1200 to 5000 g/mol.

3. Process for preparing aqueous solutions of NCO group blocked resins according to Claim 1 or 2, **characterized in that** the amount of isocyanate groups of component a) to the sum total of the amounts of isocyanate-reactive groups of components b), b1), b2), d), d1) and d2) is used in a molar ratio of 0.95 : 1 to 1.15 : 1, the amount of isocyanate groups of component a) to the amount of isocyanate-reactive groups of component c) is used in a molar ratio of 1 : 0.05 to 1 : 0.35, and the amount of basic groups of component e) to the amount of acid and/or anhydride groups of components b), b1), b2), d), d1) and d2) is used in a molar ratio of 1 : 1 to 2 : 1.

4. Process for preparing aqueous solutions of NCO group blocked resins according to any one of Claims 1 to 3, **characterized in that** ε-caprolactam is used in component c).

5. Process for preparing aqueous solutions of NCO group blocked resins according to any one of Claims 1 to 3, **characterized in that** mixtures of 3,5-dimethylpyrazole and ε-caprolactam are used in a molar ratio of 0.1 : 0.9 to 0.9 : 0.1 in component c).

6. Process for preparing aqueous solutions of NCO group blocked resins according to any one of Claims 1 to 5, **characterized in that** for the preparation of the polymer first of all the blocking agent c) and also components b), b1) and b2), completely or else only in part, are introduced as an initial charge and are dissolved, and then the complete or else the staged addition of component a) and, where appropriate, of retained amounts of b), b1), b2) and/or c) takes place at temperatures of 20°C to 80°C.

7. Process for preparing aqueous solutions of NCO group blocked resins according to any one of Claims 1 to 5, **characterized in that** for the preparation of the polymer first of all component a) is introduced as an initial charge and components b), b1), b2) and c) are then metered in, individually or in a mixture, at temperatures of 20°C to 80°C, completely or in stages.

8. Aqueous solutions of NCO group blocked resins, obtainable by a process according to any one of Claims 1 to 7.

9. Use of aqueous solutions of NCO group blocked resins according to Claim 8 in coating compositions.

10. Substrates provided with coatings obtainable using the aqueous solutions of NCO group blocked resins according to Claim 8.

11. Substrates according to Claim 10, **characterized in that** they are of metal.

12. Substrates according to Claim 11, **characterized in that** they are metal packaging forms.

## Revendications

1. Procédé pour la préparation de solutions aqueuses de résines à groupes NCO bloqués présentant des poids moléculaires numériques moyens (Mₙ) de 1000 à 7000 g/mole, qui présentent des structures polyimide et le cas échéant aussi des structures polyamide, **caractérisé en ce qu'**on prépare d'abord un polymère à partir de
a) au moins un polyisocyanate
b) au moins un monoanhydride d'un acide tricarboxylique et/ou au moins un anhydride d'un acide tétracarboxylique, ainsi que
b1) le cas échéant des acides tricarboxyliques et/ou tétracarboxyliques et
b2) le cas échéant des acides dicarboxyliques,
c) au moins un lactame à fonctionnalité NH et/ou le 3,5-diméthylpyrazole et/ou une butanonoxime auquel on ajoute le cas échéant d'autres quantités de
d) au moins un monoanhydride d'un acide tricarboxylique et/ou au moins un anhydride d'un acide tétracarboxylique, ainsi que
d1) le cas échéant des acides tricarboxyliques et/ou tétracarboxyliques et
d2) le cas échéant des acides dicarboxyliques,
la quantité de groupes isocyanate du composant a) et la somme totale des quantités de groupes réactifs avec isocyanate des composants b), b1), b2), d), d1) et d2) se trouvant dans un rapport molaire de 0,90:1 à 1,3:1, et la quantité de groupes isocyanate du composant a) et la quantité de groupes réactifs avec isocyanate du composant c) se trouvant dans un rapport molaire de 1:0,05 à 1:0,35, le mélange réactionnel est ensuite transformé avec
e) une base
la quantité de groupes acides et/ou anhydride d'acide des composants b), b1), b2), d), d1) et d2) et la quantité de groupes à effet basique du composant e) se trouvant dans un rapport molaire de 1:0,5 à 1:4,
et la résine ainsi obtenue est ensuite dissoute dans l'eau.

2. Procédé pour la préparation de solutions aqueuses de résines à groupes NCO bloqués selon la revendication 1, **caractérisé en ce que** les résines présentent des poids moléculaires numériques moyens (Mₙ) de 1200 à 5000 g/mole.

3. Procédé pour la préparation de solutions aqueuses de résines à groupes NCO bloqués selon la revendication 1 ou 2, **caractérisé en ce que** la quantité de groupes isocyanate du composant a) et la somme totale des quantités de groupes réactifs avec isocyanate des composants b), b1), b2), d), d1) et d2) se trouvent dans un rapport molaire de 0,95:1 à 1,15:1, la quantité de groupes isocyanate du composant a) et la quantité de groupes réactifs avec isocyanate du composant c) se trouvent dans un rapport molaire de 1:0,05 à 1:0,35, et la quantité de groupes à effet basique du composant e) et la quantité de groupes acides et/ou anhydride d'acide des composants b), b1), b2), d), d1) et d2) se trouvent dans un rapport molaire de 1:1 à 2:1.

4. Procédé pour la préparation de solutions aqueuses de résines à groupes NCO bloqués selon l'une quelconque des revendications 1 à 3, **caractérisé en ce que** dans le composant c), on utilise de l'ε-caprolactame.

5. Procédé pour la préparation de solutions aqueuses de résines à groupes NCO bloqués selon l'une quelconque des revendications 1 à 3, **caractérisé en ce que** dans le composant c) on utilise des mélanges de 3,5-diméthylpyrazole et d'ε-caprolactame dans un rapport molaire de 0,1:0,9 à 0,9:0,1.

6. Procédé pour la préparation de solutions aqueuses de résines à groupes NCO bloqués selon l'une quelconque des revendications 1 à 5, **caractérisé en ce que** pour la préparation du polymère, on dispose d'abord au préalable l'agent de blocage c) ainsi que les composants b), b1) et b2), complètement ou également seulement en partie, on les dissout puis l'addition complète ou également par étapes du composant a) et des quantités le cas échéant retenues de b), b1), b2) et/ou c) est effectuée à des températures de 20°C à 80°C.

7. Procédé pour la préparation de solutions aqueuses de résines à groupes NCO bloqués selon l'une quelconque des revendications 1 à 5, **caractérisé en ce que** pour la préparation du polymère, on dispose d'abord au préalable le composant a), puis on ajoute en dosant complètement ou par étapes les composants b), b1), b2) et c) seuls ou en mélange à des températures de 20°C à 80°C.

8. Solutions aqueuses de résines à groupes NCO bloqués, pouvant être obtenues selon un procédé selon l'une quelconque des revendications 1 à 7.

9. Utilisation de solutions aqueuses de résines à groupes NCO bloqués selon la revendication 8 dans des agents de revêtement.

10. Substrats pourvus de revêtements pouvant être obtenus en utilisant des solutions aqueuses de résines bloquées par des groupes NCO selon la revendication 8.

11. Substrats selon la revendication 10, **caractérisés en ce qu'**ils sont en métal.

12. Substrats selon la revendication 11, **caractérisés en ce qu'**il s'agit d'emballages métalliques.
